# EUROPÄISCHE PATENTSCHRIFT

(11) **EP 2 018 991 B1**
(45) Veröffentlichungstag und Bekanntmachung des Hinweises auf die Patenterteilung: **20.04.2011**
(21) Anmeldenummer: 08103740.0
(22) Anmeldetag: 28.04.2008
(51) Int. Cl.: B60K 31/04

(54) **Landwirtschaftliche Arbeitsmaschine**
Agricultural working machine
Machine de travail agricole

(30) Priorität: 27.07.2007 DE 102007035647
(43) Veröffentlichungstag der Anmeldung: 28.01.2009
(73) Patentinhaber: CLAAS Selbstfahrende Erntemaschinen GmbH, 33428 Harsewinkel (DE)
(72) Erfinder: Pollklas, Manfred, 33378, Rheda-Wiedenbrück (DE); Immer, Daniel, 33442, Herzebrock-Clarholz (DE)

(56) Entgegenhaltungen:
- EP-A- 0 504 913
- EP-A- 1 493 599
- DE-A1- 3 308 080
- DE-A1- 10 232 538
- US-A1- 2002 069 008

## Beschreibung

Die Erfindung betrifft eine landwirtschaftliche Arbeitsmaschine mit einer Vorrichtung zur Einstellung der Fahrgeschwindigkeit gemäß dem Oberbegriff des Anspruches 1.

Bei landwirtschaftlichen Arbeitsmaschinen, wie z.B. Feldhäcksler, besteht die Notwendigkeit, den Luftdruck in den Reifen an das befahrene Gelände anzupassen, um insbesondere Belastungen des Feldbodens zu verringern. Durch das Absenken des Reifendrucks wird die Aufstandsfläche vergrößert, wodurch der Feldboden schonend befahren werden kann. Dagegen wird für die Straßenfahrt der Reifendruck erhöht, da bei hohen Geschwindigkeiten ein höherer Druck notwendig Ist, um Schaden am Reifen zu verhindern.

Aus der DE 33 080 80 A1 ist eine Reifendruckregelanlage für Kraftfahrzeuge bekannt, die es erlaubt, während der Fahrt eine Änderung des Reifendrucks zu ermöglichen. Der Ist-Reifendruck wird mittels Drucksensoren überwacht, dessen Reifendruck Ist-Wert- Signale an ein Steuergerät weitergeleitet werden, dass eine selbsttätige Reifendruckregelung vornimmt.

Aus der DE 10 232 538 A1 ist eine Vorrichtung zur Begrenzung der Geschwindigkeit eines Fahrzeuges bekannt, welches zur Begrenzung der Geschwindigkeit eines Fahrzeuges auf einen maximal zulässigen Wertmittel aufweist, die den maximal zulässigen Wert in Abhängigkeit mindestens einer Größe, die den Kontakt des Fahrzeuges mit der Fahrbahn beeinflusst, ermittelt. Hierzu werden der Reifenddruck oder die Profiltiefe überwacht, und in Abhängigkeit von dem ermittelten Wert wird die maximale Geschwindigkeit des Fahrzeuges bestimmt.

Die DE 19 804 294 A1 beschreibt eine Vorrichtung und ein Verfahren zur Einstellung des Reifendrucks, wobei der Luftdruck im Reifen während der Fahrt an die Einsatzbedingungen angepasst wird. Die Regelung des Reifendrucks erfolgt in Abhängigkeit von spezifischen Größen wie die Achslast, die Geschwindigkeit und die Zugkraft. Grundsätzlich soll dabei die Anpassung des Reifendrucks an die Einsatzbedingungen möglichst schnell, möglichst ohne Fahrtunterbrechung und ferngesteuert von der Fahrerkabine aus erfolgen.

Nachteilig an dieser Ausführungsform ist, dass es nicht möglich ist, umgehend den Reifendruck an sich ändernde Einsatzbedingungen anzupassen. Beispielsweise wird bei einem Feldhäcksler im Feldbetrieb der Reifendruck auf ca. 0,8 bar abgesenkt. Wird dagegen der Feldhäcksler bei einem Wechsel des Erntefeldes kurzzeitig im Straßenverkehrmodus betrieben, schafft es beispielsweise eine Reifendruckregelanlage aufgrund des Reifenvolumens des Reifens nicht, kurzfristig den Reifendruck auf normaler Weise für den Straßenbetrieb erforderlichen Reifendruck von ca. 2,5 bar anzuheben oder der Fahrer vollzieht den Feldwechsel ganz ohne eine Anhebung des Reifendrucks. Jedoch kann es bei zulässigen Fahrgeschwindigkeiten eines Feldhäckslers von bis zu 40 km/h mit niedrigem Reifendruck, insbesondere bei einer Kurvenfahrt, zum Ablösen des Reifens von der Felge kommen und dies eine Gefahrensituation für die landwirtschaftliche Arbeitsmaschine und dessen Fahrer bedeuten.

Der Erfindung liegt deshalb die Aufgabe zugrunde, die Nachteile des zitierten Standes der Technik zu vermeiden und eine landwirtschaftliche Arbeitsmaschine der eingangs genannten Art derart weiterzuentwickeln, dass Gefahrensituationen durch das Ablösen des Reifens von der Felge, dadurch hervorgerufen, dass eine schnelle Anpassung des Reifendrucks an die Fahrgeschwindigkeit bei sich schnell ändernden Einsatzbedingungen nicht möglich ist, vermieden wird.

Diese Aufgabe wird erfindungsgemäß durch die kennzeichnenden Merkmale des Patentanspruchs 1 gelöst, wobei in den weiteren Patentansprüchen Merkmale aufgeführt sind, die diese Lösung in vorteilhafter Weise weiterentwickeln.

Indem die maximale Fahrgeschwindigkeit der landwirtschaftlichen Arbeitsmaschine in Abhängigkeit vom Reifendruck wenigstens eines Reifens bestimmt wird, ist sichergestellt, dass Gefahrensituationen durch das Ablösen des Reifens von der Felge, dadurch hervorgerufen, dass bei einem schnellen Wechsel vom Erntebetrieb zum Straßenbetrieb eine umgehende Anpassung des Reifendrucks an die Fahrgeschwindigkeit nicht möglich ist und die Arbeitsmaschine trotz niedrigem Reifendrucks mit der zugelassen Höchstgeschwindigkeit, bei einem Feldhäcksler bis zu 40 km/h, gefahren werden kann, vermieden wird. Erfindungsgemäss werden dabei auch unterschiedliche Reifengrößen und/oder Reifentypen und vorzugsweise die Hangneigung mit einbezogen, so dass die spezielle Ausstattung jeder Arbeitsmaschine oder spezielle Einsatzbedingungen Berücksichtigung finden.

Um die durch das Ablösen einer Felge vom Reifen bestehende Gefahrensituation für den Fahrer und für die landwirtschaftliche Arbeitsmaschine möglichst effektiv zu verhindern, wird die maximal zulässige Fahrgeschwindigkeit anhand wenigstens einer, zumindest den Parameter Reifendruck berücksichtigende Kennlinie bestimmt. Anhand einer solchen Kennlinie kann eine optimale Einstellung der jeweils vom Reifendruck abhängigen gefahrlos fahrbaren maximalen Fahrgeschwindigkeit erfolgen. Vorzugsweise berücksichtigt die Kennlinie entsprechend der Maschinenausstattung die Parameter Reifengröße und/oder Reifentyp.

In vorteilhafter Weiterbildung der Erfindung ist die wenigstens eine Kennlinie in einem Speicher gespeichert, damit eine Steuer- und Auswerteeinheit direkten Zugriff auf die vorgewählten reifendruckabhängigen Fahrgeschwindigkeiten hat, die ein gefahrloses Betreiben der Arbeitsmaschine ermöglichen, wobei vorteilhaft die vorgewählten reifendruckabhängigen Fahrgeschwindigkeiten, die Reifengröße und der Reifentyp im einfachsten Fall über ein Bedienfeld in den Speicher eingegeben werden.

Dadurch, dass mittels eines von wenigstens einem Sensor erzeugten Ausgangssignals in einer Steuer- und Auswerteeinheit der Druck wenigstens eines Reifens ermittelt wird, die Steuer- und Auswerteeinheit entsprechend des erzeugten Ausgangssignals die in der Speichereinrichtung hinterlegte reifendruckabhängig vorgewählte maximal fahrbare Fahrgeschwindigkeit abfragt und der abgefragte Fahrgeschwindigkeitswert an die Fahrgeschwindigkeitsregelungsvorrichtung zur automatischen Regelung der Fahrgeschwindigkeit übermittelt wird, erfährt der Fahrer vorteilhaft eine Entlastung, in dem er nicht mehr befürchten muss, dass es zu Reifenablösungen von der Felge kommt, weil er unbewusst die für den Reifendruck gefahrlos fahrbare maximale Fahrgeschwindigkeit überschreitet und kann sich somit ganz auf den Arbeitsbetrieb konzentrieren.

In einer vorteilhaften Weiterbildung der Erfindung kann die landwirtschaftliche Arbeitsmaschine maximal nur mit der Fahrgeschwindigkeit betrieben werden, die dem vorgewählten Fahrgeschwindigkeitswert des von dem wenigstens einen Sensor niedrigsten sensierten Reifendrucks entspricht, wenn der Sensor in verschiedenen Reifen der Arbeitsmaschine unterschiedliche Reifendrücke detektiert, so dass beispielhaft im Falle eines plötzlichen Druckabfalls in einem Reifen, eine entsprechende Anpassung der maximal fahrbaren Fahrgeschwindigkeit erfolgt.

Im einfachsten Fall ist dem Fahrer der landwirtschaftlichen Arbeitsmaschine über eine Anzeigeeinheit in der Fahrerkabine die reifendruckabhängige maximal fahrbare Fahrgeschwindigkeit visualisierbar, so dass der Fahrer über geeignete Stellmittel die entsprechende Einstellung der maximal fahrbaren Fahrgeschwindigkeit vornehmen kann,

Im Falle, dass eine automatische Einstellung der maximal fahrbaren Fahrgeschwindigkeit nicht erfolgt, wird in einer vorteilhafter Weiterbildung der Erfindung, dem Fahrer beim Erkennen einer Überschreitung der auf der Anzeigeeinheit angezeigten maximal fahrbaren Fahrgeschwindigkeit über ein Signalgeber ein optisches und/oder akustisches Warnsignal ausgeben, so dass der Fahrer umgehend die Fahrgeschwindigkeit absenken kann.

Weitere vorteilhafte Ausgestaltungen sind Gegenstand weiterer Unteransprüche und werden nachfolgend anhand von zwei Zeichnungen näher erläutert.

Es zeigen:
- Figur 1:: eine landwirtschaftliche Arbeitsmaschine in Form eines Feldhäckslers mit schematisch angedeuteter Steuer- und Auswerteeinheit
- Figur 2:: konkrete Darstellung einer Steuer- und Auswerteeinheit

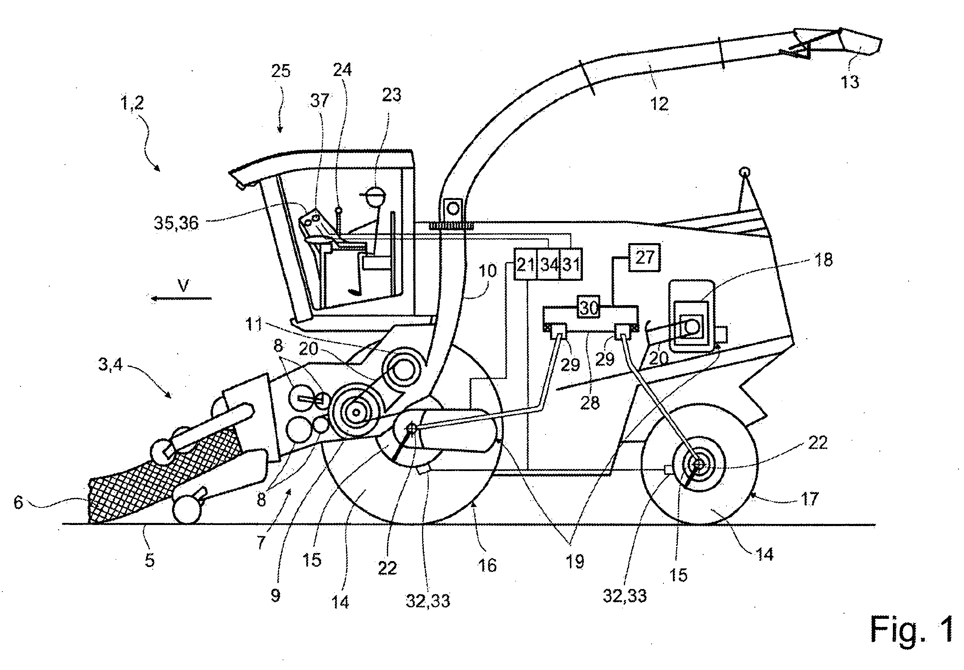

Figur 1 zeigt eine als Feldhäcksler 1 ausgeführte landwirtschaftliche Arbeitsmaschine 2, die frontseitig ein als Pickup 3 ausgeführtes Vorsatzgerät 4 aufnimmt, welches das auf dem Feldboden 5 liegende Erntegut 6, beispielsweise Gras, aufnimmt. Innerhalb der Pickup 3 wird das aufgenommene Erntegut 6 auf die Breite des Einzugsorgans 7 zusammengeführt und dann an das Einzugsorgan 7 übergeben. Das Erntegut 6 wird dann zwischen den im Einzugsorgan 7 angeordneten Einzugswalzen 8 verdichtet und an die nachgeordnete Häckseltrommel 9 weitergeleitet, Die rotierende Häckseltrommel 9 häckselt das Erntegut 6 in eine vorgebbare Länge und gibt es rückwärtig an einen Austragsschacht 10 ab. Innerhalb des Austragsschachts 10 greift ein Nachbeschleuniger 11 in den Erntegutstrom ein und beschleunigt diesen entlang des Auswurtkrümmers 12 zur sicheren Überladung auf ein nicht dargestellten Transportbehälter. Am Ende des Auswurfkrümmers 12 befindet sich eine Auswurfklappe 13 zur Bestimmung der Abgaberichtung des Erntegutes 6. Ferner besitzt der Feldhäcksler 1 aus einem Reifen 14 und einer Felge 15 bestehende Vorderräder 16 und Hinterräder 17. Der Feldhäcksler 1 weist einen Antriebsmotor 18 auf, der einen Fahrantrieb 19 zum Antrieb der Vorderräder 16 antreibt. Zusätzlich treibt der Antriebsmotor 18 über einen gemeinsamen Antriebsriemen 20 die Häckseltrommel 9, den Nachbeschleuniger 11, das Einzugsorgan 7 und das Vorsatzgerät 4 an.

Der Fahrantrieb 19 ist mit einer Fahrgeschwindigkeitsregelungsvorrichtung 21 ausgestattet, die die Fahrgeschwindigkeit v des Feldhäckslers 1 automatisch regelt. Am Fahrantrieb 19 ist ein Drehzahlsensor 22 angeordnet, der auf an sich bekannte Weise die Fahrgeschwindigkeit v und die Bewegungsrichtung des Feldhäckslers 1 detektiert. Der Drehzahlsensor 22 generiert proportional zur Fahrgeschwindigkeit v bei Vorwärtsfahrt des Feldhäckslers 1 ein Fahrgeschwindigkeitssignal vs. Bekanntermaßen und deshalb nicht näher dargestellt kann im Feldhäcksler auch ein hydrostatischer nicht näher dargestellter Fahrantrieb 19 verwendet werden. Je nach Vorgabe des Fahrers 23 wird über die Stellung des Fahrhebels 24 in der Fahrerkabine 25, wobei die Auslenkung des Fahrhabels 24 mittels eines nicht dargestellten Winkelsensors ermittelt und aus dieser Winkelauslenkung das Fahrgeschwindigkeitssignal vs generiert, ein entsprechendes nicht dargestelltes Stellsignal an den Fahrantrieb 19 übermittelt wird, so dass die gewünschte Fahrgeschwindigkeit v erreicht wird.

Zur Regelung des Reifendrucks weist der Feldhäcksler 1 eine an sich bekannte Reifendruckregelanlage 26 auf, wobei beispielhaft bei einem Feldhäcksler 1 im Feldbetrieb der Reifendruck auf ca, 0,8 bar - andere Werte sind denkbar - abgesenkt wird. Diese Reifendruckregelanlage 26 besteht aus einem Druckluftkompressor 27, der über Zuleitungen 28 mit den Reifen 14 verbunden ist. In den Zuleitungen 28 sind verstellbare Ventile 29 eingebaut, die ein kontrolliertes Befüllen und Entleeren des Reifens 14 bzw, ein Halten des Reifendrucks ermöglichen. Die Ventile 29 sind an eine Steuereinheit 30 angeschlossen, welche die Stellung der Ventile 29 regelt. Wird nun der Feldhäcksler 1 bei einem Wechsel des Erntefeldes kurzzeitig im Straßenfahrmodus betrieben, sollte der Reifendruck manuell oder mittels der Reifendruckregelanlage auf ca. 2,5 - andere Werte sind denkbar- angehoben werden, um die zulässige Straßenfahrgeschwindigkeit von bis zu 40 km/h sicher fahren zu können. Bislang sind die an sich bekannten Reifendruckregelanlagen 26 auf Grund des Reifenvolumens des Reifens nicht 14 in der Lage, kurzfristig den Reifendruck auf den erforderlichen Wert von ca. 2,5 bar anzuheben, so dass insbesondere der ungeübte Fahrer 23 eines Feldhäckslers 1 während des Wechsels des Erntefeldes trotz zu niedrigem Reifendrucks auf der Straße möglicherweise die grundsätzlich erlaubte Fahrgeschwindigkeit eines Feldhäckslers 1 von bis zu 40 km/h fährt, wobei es dann, insbesondere bei einer Kurvenfahrt, zum Ablösen des Reifens 14 von der Felge 15 kommen kann und dies eine Gefahrensituation für die landwirtschaftliche Arbeitsmaschine 2 und dessen Fahrer 23 bedeutet.
Erfindungsgemäß ist nun vorgesehen, dass die maximale Fahrgeschwindigkeit v des Feldhäckslers 1 in Abhängigkeit vom Reifendruck wenigstens eines Reifens 14 bestimmt wird. In einer Speichereinrichtung 31 ist wenigstens der Parameter Reifendruck eingebar, wobei jedem Druckwert, beispielsweise in einem Druckbereich von 0,0 bis 2,5 bar in 10-tel Schritten, eine maximal fahrbare Fahrgeschwindigkeit v zugeordnet ist. Im Ausführungsbeispiel wird der Reifendruck der Reifen mittels als Drucksensoren 32 ausgeführte Sensoren 33 erfasst. Das von den Sensoren 33 generierte, den aktuellen Reifendruck darstellende Drucksignal wird an eine Steuer- und Auswerteeinheit 34 weitergeleitet, die mit der Speichereinrichtung 31 in Verbindung steht. Anhand des ermittelten Druckwertes wird der jeweils entsprechende in der Speichereinrichtung 31 über ein Bedienfeld 35 eingebare und hinterlegte maximal fahrbare Fahrgeschwindigkeitswert abgefragt. Der abgefragte Fahrgeschwindigkeitswert wird an eine Fahrgeschwindigkeitsregelungsvorrichtung 21 weitergeleitet, die einen Abgleich mit der aktuell maximal fahrbaren Fahrgeschwindigkeit v durchführt und eventuell eine notwendige Änderung vornimmt.

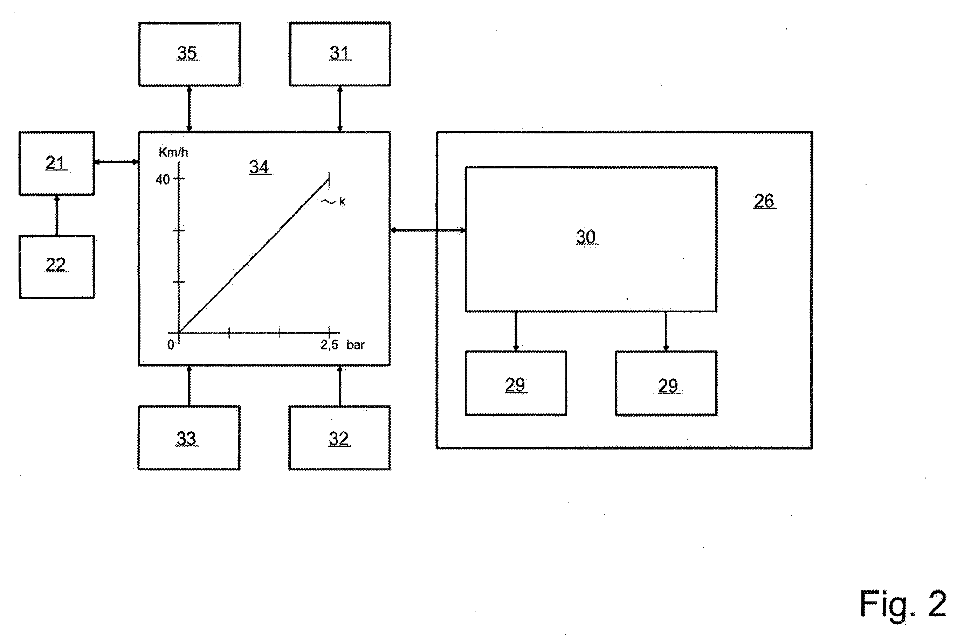

Denkbar ist zudem, dass die Einstellung der jeweils maximal fahrbaren Fahrgeschwindigkeit v dadurch erreicht wird, dass die Auslenkung des Fahrhebels 24 für die Vorwärts-Fahrgeschwindigkeit v über hier nicht näher dargestellte Mittel begrenzt wird. Wie später noch näher in Fig. 2 erläutert, kann erfindungsgemäß vorgesehen sein, dass die jeweils vom Reifendruck abhängige maximal fahrbare Fahrgeschwindigkeit v anhand einer in der Speichereimichtung 31 hinterlegten Kennlinie k bestimmt und mittels einer Steuer- und Auswerteeinheit 34 gesteuert werden.

Ebenso ist denkbar, dass der dem Reifendruck entsprechende in der Speichereinrichtung 31 abgefragte maximal fahrbare Fahrgeschwindigkeit v dem Fahrer 23 in der Fahrerkabine 25 über eine Anzeigeeinheit 36 angezeigt wird, so dass der Fahrer 23 informiert ist, mit welcher Fahrgeschwindigkeit v die landwirtschaftliche Arbeitsmaschine 2 maximal fahrbar ist und eine entsprechende Einstellung der Fahrgeschwindigkeit v vornehmen kann, ohne ein Lösen des Reifens 14 von der Felge 15 befürchten zu müssen. Sollte insbesondere der ungeübte Fahrer 23 dennoch die für den Reifendruck maximal fahrbare Fahrgeschwindigkeit v überschreiten, kann vorgesehen sein, dass über ein hier nicht dargestellten Signalgeber ein optisches und/oder akustisches Warnsignal ausgeben wird, so dass der Fahrer 23 umgehend manuell die Fahrgeschwindigkeit v über den Fahrhebel 24 anpassen kann.

Zusätzlich ist denkbar, in der Nähe des Bedienfeldes 35 ein Nottaster 37 anzubringen, den der Fahrer 23 aktivieren kann, wenn er die eigentlich maximal fahrbare Fahrgeschwindigkeit v überschritten hat, wobei dann ein automatisches Absenken der Fahrgeschwindigkeit v erfolgt. Ob die Fahrgeschwindigkeit v nur auf die dem Reifendruck entsprechende maximal fahrbare Fahrgeschwindigkeit v oder auf eine noch geringe Fahrgeschwindigkeit v abgesenkt wird, ist individuell festlegbar.

In einer vorteilhaften Weiterbildung der Erfindung kann die landwirtschaftliche Arbeitsmaschine 1 maximal nur mit der Fahrgeschwindigkeit v betrieben werden, die dem vorgewählten Fahrgeschwindigkeitswert des von den Sensoren 33 am niedrigsten sensierten Reifendruck entspricht, wenn der Sensor 33 in verschiedenen Reifen 14 der Arbeitsmaschine 2 unterschiedliche Reifendrücke detektiert, so dass beispielhaft im Falle eines plötzlichen Druckabfalls in einem Reifen 14, die maximal gefahrlos fahrbare Fahrgeschwindigkeit v, entsprechend eingestellt wird. Im Weiteren kann vorgesehen sein, dass der Schlupf der Felge 15 gegenüber dem Reifen 14, sensiert durch hier nicht näher dargestellte Schlupfsensoren, bei der Bestimmung der reifdruckabhängigen Fahrgeschwindigkeit v Berücksichtigung findet, insbesondere beim Erntebetrieb weisen die Reifen 14 zur Bodenschonung einen niedrigeren Reifdruck auf, so dass es bei einer zu hohen Fahrgeschwindigkeit v zum Schlupf der Felge 15 gegenüber dem Reifen 14 kommen und daraus folgernd sich der Reifen von der Felge 15 lösen kann. Denkbar ist zudem, dass beim Sensieren eines Schlupfes der Felge 15 gegenüber den Reifen 14, mittels der Reifendruckregelanlage 26 eine Erhöhung des Reifendrucks erfolgt, um das Ablösen des Reifens 15 von der Felge 14 zu vermeiden.

Fig. 2 zeigt die Steuer- und Auswerteeinheit 34 die mit der Speichereinrichtung 31, mit der Fahrgeschwindigkeitsregelungsvorrichtung 21, mit der Reifendruckregelanlage 26, mit dem Bedienfeld 35 und mit den Sensoren 33 in Verbindung steht. In der Speichereinrichtung 31 ist zumindest eine Kennlinie k hinterlegt, welche jeweils den erfindungsgemäßen Zusammenhang zwischen dem Reifendruck und der jeweils maximal fahrbaren Fahrgeschwindigkeit v bestimmt. Die Vorgabe der reifendruckabhängigen maximal fahrbaren Fahrgeschwindigkeiten v erfolgt entweder manuell vom Fahrer 23 durch Eingabe über das Bedienfeld 35 oder ist bereits entsprechend der Reifenausstattung des Feldhäckslers 1 in der Speichervorrichtung 31 vorgegeben. Zudem ist denkbar, dass die Kennlinie k die Reifengröße und/oder den Reifentyp und /oder die Hangneigung (hier nicht dargestellt) berücksichtigt, um optimale die jeweils maximal fahrbare Fahrgeschwindigkeit v festigen zu können, zur Gewährleistung eines sicheren Arbeitsbetriebes der landwirtschaftlichen Arbeitsmaschine 1. Die dargestellte Kennlinie k hat einen gemeinsamen Ursprung und einen gemeinsamen Endpunkt. Der Ursprung zeigt einen Reifdruck von 0 bar, entspricht somit einem nicht mit Luft gefüllten Reifen 14, mit dem grundsätzlich nicht gefahren werden sollte, dem eine maximal fahrbare Fahrgeschwindigkeit v von 0 km/h vorgegeben wird. Der Endpunkt der Kennlinie wird durch den maximal vom Reifenhefsteller bestimmten Reifendruck, hier beispielhaft 2,5 bar, bei maximaler vom TÜV zugelassener Fahrgeschwindigkeit v von beispielhaft 40 km/h bestimmt Die Zwischenwerte errechnen sich anhand eines proportionalen Zusammenhangs zwischen dem Reifendruck und der jeweils maximal fahrbaren Fahrgeschwindigkeit v.

Entsprechend des von den Sensoren 33 detektierten Reifendrucks wird anhand der in der Speichereinrichtung 31 hinterlegten Kennlinie k die entsprechende maximal fahrbare Fahrgeschwindigkeit v abgefragt. Der ermittelte Fahrgeschwindigkeitswert wird an die Fahrgeschwindigkeitsregelungsvorrichtung 21 übermittelt, die eine entsprechende Begrenzung der Fahrgeschwindigkeit v vornimmt, wobei sich dieser Prozess kontinuierlich wiederholt, um aufgrund möglicher Änderungen des Reifendrucks eine entsprechende Anpassung bei der maximal fahrbaren Fahrgeschwindigkeit v vornehmen zu können.

Es liegt im Rahmen des Könnens eines Fachmanns das beschriebene Ausführungsbeispiel in nicht dargestellter Weise abzuwandeln oder in anderen landwirtschaftlichen Arbeitsmaschinen, insbesondere Mähdrescher und Traktoren einzusetzen, um die beschriebenen Effekte zu erzielen, ohne dabei den Rahmen der Erfindung zu verlassen.

Die Erfindung könnte beispielsweise auch für Gespanne, bestehend aus einem Schlepper und einem eine Reifdruckregelanlage aufweisenden Anhängefahrzeung zum Einsatz kommen, wobei dann die Fahrgeschwindigkeit des Schleppers in Abhängigkeit vom Reifendruck der Reifen des Anhängefahrzeuges bestimmt wird.

### Bezugszeichenliste:

- 1: Feldhäcksler
- 2: landwirtschaftliche Arbeitsmaschine
- 3: Pickup
- 4: Vorsatzgerät
- 5: Feldboden
- 6: Erntegut
- 7: Einzugsorgan
- 8: Einzugswalzen
- 9: Häckseltrommel
- 10: Austragsschacht
- 11: Nachbeschleuniger
- 12: Auswurfkrümmer
- 13: Auswurfklappe
- 14: Reifen
- 15: Felge
- 16: Vorderrad
- 17: Hinterrad
- 18: Antriebsmotor
- 19: Fahrantrieb
- 20: Antriebsriemen
- 21: Fahrgeschwindigkeitsregelungsvorrichtung
- 22: Drehzahlsensor
- 23: Fahrer
- 24: Fahrhebel
- 25: Fahrerkabine
- 26: Reifendruckregelanlage
- 27: Druckluftkompressor
- 28: Zuleitung
- 29: Ventile
- 30: Steuereinheit
- 31: Speichereinrichtung
- 32: Drucksensor

- 33: Sensor
- 34: Steuer- und Auswerteeinheit
- 35: Bedienfeld
- 36: Anzeigeeinheit
- 37: Nottaster
- v: Fahrgeschwindigkeit
- vs: Fahrgeschwindigkeitssignal
- k: Kennlinie

## Patentansprüche

1. Landwirtschaftliche Arbeitsmaschine, insbesondere ein Feldhäcksler, mit einer Vorrichtung zur Einstellung der Fahrgeschwindigkeit,
**dadurch gekennzeichnet, dass**
die maximale Fahrgeschwindigkeit (v) der landwirtschaftlichen Arbeitsmaschine (2) in Abhängigkeit vom Reifendruck wenigstens eines Reifens (14) bestimmt wird, wobei für unterschiedliche Reifengrößen und / oder Reifentypen reifendruckabhängige maximal fahrbare Fahrgeschwindigkeiten (v) vorwählbar sind.

2. Landwirtschaftliche Arbeitsmaschine nach Anspruch 1, **dadurch gekennzeichnet, dass** die maximal fahrbare Fahrgeschwindigkeit (v) anhand wenigstens einer Kennlinie (k) bestimmt wird, wobei die wenigstens eine Kennlinie (k) wenigstens den Parameter Reifendruck eines Reifens (14) berücksichtigt.

3. Landwirtschaftliche Arbeitsmaschine nach Anspruch 2,
**dadurch gekennzeichnet, dass**
die wenigstens eine Kennlinie (k) zusätzlich die Parameter Reifentyp und/oder die Reifengröße berücksichtigt.

4. Landwirtschaftliche Arbeitsmaschine nach einem der vorhergehenden Ansprüche 2 und 3,
**dadurch gekennzeichnet, dass**
die wenigstens eine Kennlinie (k) in einer Speichereinrichtung (31) abspeicherbar ist, wobei der jeweils vorgewählte reifendruckabhängige maximale Fahrgeschwindigkeitswert, der Reifentyp und die Reifengröße über ein Bedienfeld (35) in der Speichereinrichtung (31) eingebbar sind.

5. Landwirtschaftliche Arbeitsmaschine nach wenigstens einem der vorhergehenden Ansprüche,
**dadurch gekennzeichnet, dass**
mittels eines von wenigstens einem Sensor erzeugten Ausgangssignals in einer Steuer- und Auswerteeinheit (34) der Druck wenigstens eines Reifens (14) ermittelt wird, die Steuer- und Auswerteeinheit (34) entsprechend des erzeugten Ausgangssignals die in der Speichereinrichtung (31) hinterlegte reifendruckabhängig vorgewählte maximal fahrbare Fahrgeschwindigkeit (v) abfragt und der abgefragte Fahrgeschwindigkeitswert an die Fahrgeschwindigkeitsregelungsvorrichtung (21) zur automatischen Regelung der Fahrgeschwindigkeit (v) übermittelt wird.

6. Landwirtschaftliche Arbeitsmaschine nach wenigstens einem der vorhergehenden Ansprüche,
**dadurch gekennzeichnet, dass**
die landwirtschaftliche Arbeitsmaschine (2) maximal mit der Fahrgeschwindigkeit (v) betrieben werden kann, die dem vorgewählten Fahrgeschwindigkeitswert des von den Sensoren (33) niedrigsten sensierten Reifendrucks entspricht, wenn die Sensoren (33) in verschiedenen Reifen (14) der landwirtschaftlichen Arbeitsmaschine (2) unterschiedliche Reifendrücke detektieren.

7. Landwirtschaftliche Arbeitsmaschine nach einem der vorhergehenden Ansprüche 5 und 6,
**dadurch gekennzeichnet, dass**
der wenigstens eine Sensor (33) als Drucksensor (32) ausgebildet ist und den Reifendruck detektiert.

8. Landwirtschaftliche Arbeitsmaschine nach wenigstens einem der vorhergehenden Ansprüche,
**dadurch gekennzeichnet, dass**
dem Fahrer (23) der landwirtschaftlichen Arbeitsmaschine (2) über eine Anzeigeeinheit (36) in der Fahrerkabine (25) die reifendruckabhängige maximal fahrbare Fahrgeschwindigkeit (v) visualisiert wird und über geeignete Stellmittel die manuelle Einstellung der maximal fahrbaren Fahrgeschwindigkeit (v) durch den Fahrer (23) durchführbar ist.

9. Landwirtschaftliche Arbeitsmaschine nach wenigstens einem der vorhergehenden Ansprüche,
**dadurch gekennzeichnet, dass**
bei einer Überschreitung der in Abhängigkeit vom Reifendruck festgelegten maximal fahrbaren Fahrgeschwindigkeit (v) dem Fahrer (23) über einen Signalgeber ein optisches und/oder akustisches Warnsignal ausgegeben und/oder der Fahrantrieb (19) der landwirtschaftlichen Arbeitsmaschine (2) automatisch zumindest auf die dem Reifendruck entsprechend vorgewählte maximal fahrbare Fahrgeschwindigkeit (v) abgeregelt wird.

10. Landwirtschaftliche Arbeitsmaschine nach wenigstens einem der vorhergehenden Ansprüche,
**dadurch gekennzeichnet, dass**
die landwirtschaftliche Arbeitsmaschine (2), ein Mähdrescher ein Feldhäcksler (1) oder ein Traktor ist.

## Claims

1. An agricultural working machine, in particular a forage harvester, having a device for adjusting the speed of travel,
**characterised in that**
the maximum speed of travel (v) of the agricultural working machine (2) is determined in dependence on the tyre pressure of at least one tyre (14), wherein maximum travellable speeds of travel (v) can be preselected in dependence on tyre pressure for different tyre sizes and/or tyre types.

2. An agricultural working machine according to claim 1 **characterised in that** the maximum travellable speed of travel (v) is determined on the basis of at least one characteristic curve (k), wherein the at least one characteristic curve (k) takes account of at least the parameter consisting of the tyre pressure of a tyre (14).

3. An agricultural working machine according to claim 2 **characterised in that** the at least one characteristic curve (k) additionally takes account of the parameters consisting of tyre type and/or tyre size.

4. An agricultural working machine according to one of preceding claims 2 and 3 **characterised in that** the at least one characteristic curve (k) can be stored in a memory device (31), wherein the respectively preselected tyre pressure-dependent maximum travel speed value, the tyre type and the tyre size can be inputted into the memory device (31) by way of an operator panel (35).

5. An agricultural working machine according to at least one of the preceding claims **characterised in that** the pressure of at least one tyre (14) is ascertained by means of an output signal produced by at least one sensor in a control and evaluation unit (34), the control and evaluation unit (34) in accordance with the output signal produced queries the maximum travellable speed of travel (v) which was stored in the memory device (31) and which is preselected in tyre pressure-dependent relationship and the queried travel speed value is communicated to the travel speed regulating device (21) for automatic regulation of the speed of travel (v).

6. An agricultural working machine according to at least one of the preceding claims **characterised in that** the agricultural working machine (2) can be operated at a maximum at the speed of travel (v) corresponding to the preselected travel speed value of the lowest tyre pressure sensed by the sensors (33) when the sensors (33) detect different tyre pressures in different tyres (14) of the agricultural working machine (2).

7. An agricultural working machine according to one of preceding claims 5 and 6 **characterised in that** the at least one sensor (33) is in the form of a pressure sensor (32) and detects the tyre pressure.

8. An agricultural working machine according to at least one of the preceding claims **characterised in that** the tyre pressure-dependent maximum travellable speed of travel (v) is displayed to the driver (23) of the agricultural working machine (2) by way of a display unit (36) in the driver cab (25) and manual adjustment of the maximum travellable speed of travel (v) can be implemented by the driver (23) by way of suitable adjusting means.

9. An agricultural working machine according to at least one of the preceding claims **characterised in that** when the maximum travellable speed of travel (v) which is established in dependence on the tyre pressure is exceeded an optical and/or acoustic warning signal is outputted to the driver (23) by way of a signal transmitter and/or the travel drive (19) of the agricultural working machine (2) is automatically regulated down at least to the maximum travellable speed of travel (v) preselected in accordance with the tyre pressure.

10. An agricultural working machine according to at least one of the preceding claims **characterised in that** the agricultural working machine (2) is a combine harvester, a forage harvester (1) or a tractor.

## Revendications

1. Machine de travail agricole, en particulier ensileuse, comportant un dispositif de réglage de la vitesse, **caractérisée en ce que** la vitesse maximale (v) de la machine de travail agricole (2) est déterminée en fonction de la pression de gonflage d'au moins un pneu (14), des vitesses maximales praticables (v) en fonction de la pression de gonflage pouvant être présélectionnées pour différentes tailles de pneus et/ou différents types de pneus.

2. Machine de travail agricole selon la revendication 1, **caractérisée en ce que** la vitesse maximale praticable (v) est déterminée à l'aide d'au moins une courbe caractéristique (k), ladite au moins une courbe caractéristique (k) tenant compte au moins du paramètre pression de gonflage d'un pneu (14).

3. Machine de travail agricole selon la revendication 2, **caractérisée en ce que** ladite au moins une courbe caractéristique (k) tient également compte des paramètres type de pneu et/ou taille de pneu.

4. Machine de travail agricole selon une des revendications précédentes 2 et 3, **caractérisée en ce que** ladite au moins une courbe caractéristique (k) peut être mémorisée dans un dispositif de mémorisation (31), la valeur de vitesse maximale en fonction de la pression de gonflage présélectionnée, le type de pneu et la taille de pneu pouvant être entrés dans le dispositif de mémorisation (31) via un panneau de commande (35).

5. Machine de travail agricole selon au moins une des revendications précédentes, **caractérisée en ce que** la pression d'au moins un pneu (14) est déterminée dans une unité de commande et d'évaluation (34) au moyen d'au moins un signal de sortie généré par un capteur, l'unité de commande et d'évaluation (34) interroge en fonction du signal de sortie généré la vitesse maximale praticable (v) présélectionnée en fonction de la pression de gonflage stockée dans le dispositif de mémorisation (31) et la valeur de vitesse interrogée est transmise au dispositif de régulation de vitesse (21) pour la régulation automatique de la vitesse (v).

6. Machine de travail agricole selon au moins une des revendications précédentes, **caractérisée en ce que**, lorsque les capteurs (33) détectent des pressions de gonflage différentes dans différents pneus (14) de la machine de travail agricole (2), la machine de travail agricole (2) peut être exploitée au maximum à la vitesse (v) correspondant à la valeur de vitesse présélectionnée pour la pression de gonflage la plus basse détectée par les capteurs (33).

7. Machine de travail agricole selon une des revendications précédentes 5 et 6, **caractérisée en ce que** ledit au moins un capteur (33) est conformé en capteur de pression (32) et détecte la pression de gonflage.

8. Machine de travail agricole selon au moins une des revendications précédentes, **caractérisée en ce que** la vitesse maximale praticable (v) en fonction de la pression de gonflage est signalée au conducteur (23) de la machine de travail agricole (2) par l'intermédiaire d'une unité d'affichage (36) disposée dans la cabine de conduite (25), et le réglage manuel de la vitesse maximale praticable (v) est réalisable par le conducteur (23) par l'intermédiaire de moyens de réglage appropriés.

9. Machine de travail agricole selon au moins une des revendications précédentes, **caractérisée en ce que**, en cas de dépassement de la vitesse maximale praticable (v) fixée selon la pression de gonflage définie, un signal d'avertissement optique et/ou acoustique est envoyé au conducteur (23) par un émetteur de signaux et/ou le système d'entraînement (19) de la machine de travail agricole (2) est automatiquement ramené au moins à la vitesse maximale praticable présélectionnée (v) correspondant à la pression de gonflage.

10. Machine de travail agricole selon au moins une des revendications précédentes, **caractérisée en ce que** la machine de travail agricole (2) est une moissonneuse-batteuse, une ensileuse (1) ou un tracteur.
